# EUROPÄISCHE PATENTSCHRIFT

(11) **EP 2 557 506 B1**
(45) Veröffentlichungstag und Bekanntmachung des Hinweises auf die Patenterteilung: **19.03.2014**
(21) Anmeldenummer: 11176910.5
(22) Anmeldetag: 09.08.2011
(51) Int. Cl.: G06F 13/42

(54) **Verfahren zur Verarbeitung von Daten eines Steuergeräts in einem Datenkommunikationsgerät**
Method for processing data of a control device in a data communication device
Procédé de traitement de données d'un appareil de commande dans un appareil de communication de données

(43) Veröffentlichungstag der Anmeldung: 13.02.2013
(73) Patentinhaber: dSPACE digital signal processing and control engineering GmbH, 33102 Paderborn (DE)
(72) Erfinder: Dressler, Marc, 32805 Horn-Bad Meinberg (DE); Hufnagel, Thorsten, D-33154 Salzkotten (DE); Kellers, Bastian, 33102 Paderborn (DE); Hofmann, Daniel, 33102 Paderborn (DE)

(56) Entgegenhaltungen:
- DE-A1-102006 062 555
- US-B2- 7 454 555

## Beschreibung

Die Erfindung betrifft ein Verfahren zur Verarbeitung von Daten eines Steuergeräts in einem Datenkommunikationsgerät gemäß dem Oberbegriff des Patentanspruchs 1.

Aus der Druckschrift DE 10 2006 062 555 A1 ist ein Verfahren zur Verarbeitung von Daten eines Steuergeräts in einem Datenkommunikationsgerät bekannt. Hierbei werden Daten des Steuergeräts in einem beliebigen Speicherbereich des Datenkommunikationsgeräts gespeichert. Neben der Erfassung der Daten eines Steuergeräts ist unter der Verarbeitung von Daten in dem Datenkommunikationsgerät beispielsweise auch das Schreiben von Daten durch das Kommunikationsgerät zu verstehen.

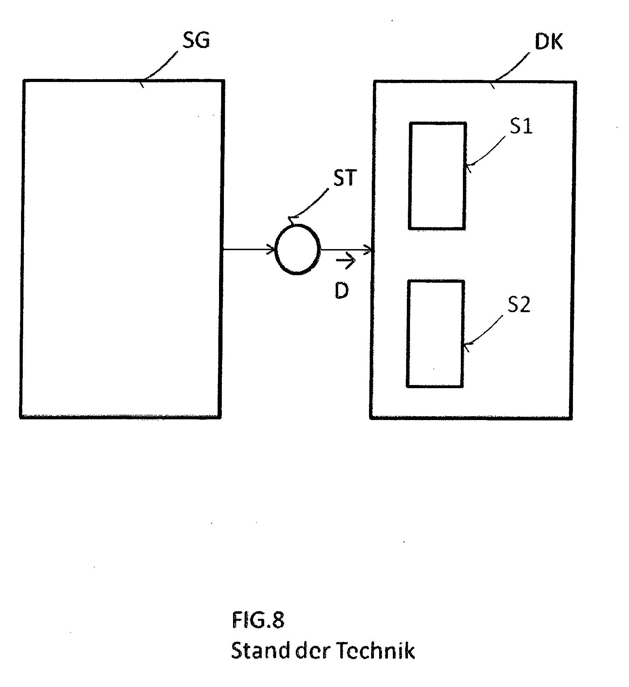

Wie in Figur 8 dargestellt, ist ein Steuergerät SG über eine Schnittstelle ST mit einem Datenkommunikationsgerät DK verbunden, wobei das Datenkommunikationsgerät DK mehrere Speicherbereiche S1, S2 hat und jedes Datum der Daten D ausschließlich in einem der mehreren Speicherbereiche gespeichert wird. Über die Schnittstelle ST werden Daten D vom Steuergerät SG an das Datenkommunikationsgerät DK übertragen.

Aus der Druckschrift DE 10 2006 062 555 A1 ist ein Verfahren zur Übertragung von Daten D eines Steuergeräts SG an ein Datenkommunikationsgerät DK bekannt, bei dem das Datenkommunikationsgerät DK einen Mikrokontroller, einen Speicher und eine Schnittstelle ST, vorzugsweise eine Debug-Schnittstelle enthält. Mit der Schnittstelle ST, die eine sogenannte Trace-Funktionalität aufweist, ist es möglich zu beobachtende Adressen im Speicher eines Steuergeräts SG zu überwachen und die Daten D an das Datenkommunikationsgerät DK zu übertragen.

Das erfindungsgemäße Datenkommunikationsgerät DK weist mindestens zwei Speicherbereiche S1, S2 auf. Die mehreren Speicherbereiche sind beispielsweise als mehrere physische Speicher oder auch als mehrere Bereiche eines physischen Speichers ausgeprägt. Im Falle mehrerer physischer Speicher erfolgt der Zugriff auf die Speicher beispielsweise gleichzeitig, bei mehreren Speicherbereichen eines physischen Speichers erfolgt der Zugriff nicht zeitgleich, beispielsweise abwechselnd. In einer weiteren Variante sind einige Speicherbereiche separate Speicher während andere Speicherbereiche zu einem physischen Speicher gehören.

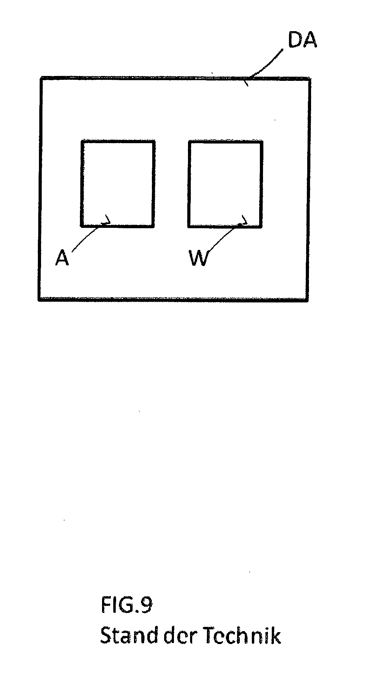

Wie in Figur 9 dargestellt, enthält ein Datum DA aus der Menge der Daten D eine Adresse A und einen Wert W, wobei die Adresse A einer Speicherstelle eines Speichers in dem Steuergerät SG zugeordnet ist.

Vor diesem Hintergrund besteht die Aufgabe der Erfindung darin, ein Verfahren anzugeben, das den Stand der Technik weiterbildet.

Die Aufgabe wird durch ein Verfahren zur Verarbeitung von Daten eines Steuergeräts in einem Datenkommunikationsgerät mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Verfahren bereitgestellt zur Verarbeitung von Daten D eines Steuergeräts SG in einem Datenkommunikationsgerät DG, wobei das Datenkommunikationsgerät DG einen ersten Speicherbereich S1 und einen zweiten Speicherbereich S2 aufweist und mit dem Steuergerät SG über eine Schnittstelle ST verbunden ist und die Daten D von dem Steuergerät SG über die Schnittstelle ST an das Datenkommunikationsgerät DG übertragen werden. Jedes Datum DA der Daten D weist eine Adresse A und einen Wert W auf. Ein Wert W wird identisch im ersten Speicherbereich S1 und im zweiten Speicherbereich S2 gespeichert. Von dem Datenkommunikationsgerät DG wird geprüft, ob ein erster Trigger T1 vorliegt. Bei dem Vorliegen des ersten Triggers T1 wird das Speichern im ersten Speicherbereich S1 unterbrochen oder es wird bei dem ersten Trigger T1 die Triggerklasse geprüft und nur bei Vorliegen einer vorgegebenen Triggerklasse das Speichern im ersten Speicherbereich S1 unterbrochen. Anschließend werden aus dem ersten Speicherbereich S1 Werte W der Daten D ausgelesen, wobei von dem Datenkommunikationsgerät DG, zeitlich nach dem ersten Trigger T1 eintreffende Werte W' in dem zweiten Speicherbereich S2 gespeichert werden.

Ein Vorteil des erfindungsgemäßen Verfahrens ist es, dass ein konsistentes Auslesen von Werten W aus einem Speicherbereich S1, S2 des Datenkommunikationsgeräts DG zu einem Zeitpunkt, an dem ein Trigger T1, T2 vorliegt, ermöglicht wird. Konsistentes Auslesen von Werten W zu einem Zeitpunkt bedeutet, dass genau die Werte W der Daten D ausgelesen werden, die zu dem Zeitpunkt des Eintreffens des Triggers im Speicher gespeichert sind und dass diese Werte W nicht bereits durch nachfolgende Werte W' überschrieben wurden.

In einer weiteren Ausführungsform wird jeder Wert W identisch im ersten Speicherbereich S1 und im zweiten Speicherbereich S2 gespeichert. Bei dem Vorliegen des ersten Triggers T1 werden, auch wenn das Speichern im ersten Speicherbereich S1 unterbrochen wird, weitere, zeitlich nach dem ersten Trigger T1 eintreffende Werte W', währenddessen in dem zweiten Speicherbereich S2 gespeichert. Durch die identische Speicherung jedes Werts W und der Speicherung weiterer Werte W' liegen im zweiten Speicherbereich S2 alle vom Steuergerät SG übermittelten Daten D vor.

In einer Weiterbildung wird von dem Datenkommunikationsgerät DG geprüft, ob ein zweiter Trigger T2 vorliegt. Bei dem Vorliegen des zweiten Triggers T2 wird das Speichern im zweiten Speicherbereich S2 unterbrochen und es werden aus dem zweiten Speicherbereich S2 Werte W der Daten D ausgelesen. Durch die identische Speicherung der Werte W in beiden Speicherbereichen S1, S2 bis zum Eintreffen des ersten Triggers T1 und der Speicherung der weiteren Werte W' im zweiten Speicherbereich S2 bis zum Eintreffen des zweiten Triggers T2 wird jeweils ein Speicherbereich mit konsistenten, das heißt nach Eintreffen des Triggers nicht überschriebenen, Werten W pro Trigger erreicht. Vorteilhafterweise werden die Speicherbereiche S1, S2 unabhängig voneinander ausgelesen.

In einer weiteren Ausführungsform weist das Datenkommunikationsgerät DG eine erste Datenerfassungseinheit und eine zweite Datenerfassungseinheit auf. Durch die erste Datenerfassungseinheit werden bei dem Vorliegen des ersten Triggers T1 die Werte W aus dem ersten Speicherbereich S1 ausgelesen werden und durch die zweite Datenerfassungseinheit bei dem Vorliegen des zweiten Triggers T2 die Werte W aus dem zweiten Speicherbereich S2 ausgelesen.

Indem jedem Trigger T1, T2 jeweils ein Speicherbereich S1, S2 zugeordnet wird, lassen sich die Werte W durch die Datenerfassungseinheiten unabhängig voneinander auslesen.

Eine Weiterbildung von unterbrechenden Triggern besteht darin, dass der erste Trigger T1 eine erste Priorität P1 und der zweite Trigger T2 eine zweite Priorität P2 aufweist. Wenn die zweite Priorität P2 höher als die erste Priorität P1 ist, wird das Auslesen der Werte W des ersten Speicherbereichs S1 unterbrochen und das Auslesen der Werte W des zweiten Speicherbereichs S2 gestartet. Auch bei unterbrechenden Triggern werden die Werte W konsistent ausgelesen.

In einer weiteren Ausführungsform wird das Auslesen der Werte W des ersten Speicherbereichs S1 nach dem Auslesen der Werte W des zweiten Speicherbereichs S2 fortgesetzt.

In einer weiteren Ausführungsform sind sowohl dem ersten Trigger T1 als auch dem zweiten Trigger T2 Adressen des ersten Speicherbereichs S1 und / oder des zweiten Speicherbereichs S2 zugeordnet. Weiterhin ist das Datenkommunikationsgerät DG mit einem Datenverarbeitungsgerät verbunden. Die aus einem ersten Speicherbereich S1 und / oder aus einem zweiten Speicherbereich S2 ausgelesenen Werte W werden an das Datenverarbeitungsgerät DG übertragen. Ausgelesene Werte W, deren zugeordneter erster Trigger T1 eine niedrigere Priorität P1 hat als der zweite Trigger T2 eines noch nicht beendeten Auslesevorgangs, werden erst dann an das Datenverarbeitungsgerät übertragen, wenn die Werte W, deren Adressen dem zweiten Trigger T2 zugeordnet wurden, an das Datenverarbeitungsgerät übertragen wurden.

Dadurch wird eine noch schnellere Verarbeitung der Werte W eines hoch priorisierten Triggers T2 gewährleistet.

Gemäß einer anderen Weiterbildung weist das Datenkommunikationsgerät DG einen ersten Pufferspeicher PS1 auf, der dem ersten Speicherbereich S1 zugeordnet ist. Während der Unterbrechung des Speicherns in den ersten Speicherbereich S1 werden weitere Werte W der Daten D im ersten Pufferspeicher PS1 zwischengespeichert und die zwischengespeicherten Werte W nach dem Auslesen in dem ersten Speicherbereich S1 gespeichert. Dadurch wird der erste Speicherbereich S1 nach dem Auslesen aktualisiert, so dass der erste Speicherbereich S1 anschließend konsistente Werte W enthält.

In einer weiteren Ausführungsform ist dem ersten Speicherbereich S1 ein erster Pufferspeicher PS1 zugeordnet ist und dem zweiten Speicherbereich S2 ein zweiter Pufferspeicher PS2, wobei der erste Pufferspeicher PS1 und der zweite Pufferspeicher PS2 jeweils als ein separater Speicher oder als ein Teil eines Speichers mit mehreren Ausgängen ausgebildet ist.

In einer weiteren Ausführungsform ist dem ersten Pufferspeicher PS1 und dem zweiten Pufferspeicher PS2 ein gemeinsamer dritter Pufferspeicher PS3 vorgelagert. Durch den vorgelagerten gemeinsamen Pufferspeicher PS3 wird beispielsweise ein Überlauf der den Speicherbereichen zugeordneten Pufferspeicher PS1, PS2 verhindert.

In einer weiteren Ausführungsform wird der Zugriff auf den zweiten Speicherbereich S2 erleichtert. So weist der erste Speicherbereich S1 eine erste Speicheradresse und der zweite Speicherbereich S2 eine zweite Speicheradresse auf. Um die zweite Speicheradresse des Werts W im zweiten Speicherbereich S2 zu erhalten, beispielsweise um einen Wert W in den zweiten Speicherbereich S2 zu schreiben oder zu lesen, wird ein vorgegebener Adresswert auf die erste Speicheradresse des ersten Speicherbereichs S1 addiert. Der vorgegebene Adresswert ist beispielsweise die Differenz zwischen der ersten Speicheradresse und der zweiten Speicheradresse. Zum Auslesen von Werten W werden im Stand der Technik beispielsweise Adress-Listen genutzt, die angeben, an welchem Speicherort ein Wert W gespeichert ist. Durch die Addition des vorgegebenen Adresswerts wird beispielsweise zum Auslesen von Werten W anstatt jeweils einer Adress-Liste für jeden Speicherbereich S1, S2 nur eine Adress-Liste benötigt und es werden Ressourcen und Konfigurationszeit gespart.

In einer weiteren Ausführungsform wird der erste Trigger T1 genau dem ersten Speicherbereich S1 zugeordnet, der zweite Trigger T2 genau dem zweiten Speicherbereich S2 zugeordnet. Bei Vorliegen des ersten Triggers T1 werden die Werte W nur aus dem ersten Speicherbereich S1 ausgelesen und bei Vorliegen des zweiten Triggers T2 werden die Werte W nur aus dem zweiten Speicherbereich S2 ausgelesen. Dadurch wird verhindert, dass durch einen Trigger mehrfach dieselben Werte aus verschiedenen Speicherbereichen S1, S2 ausgelesen werden.

In einer bevorzugten Ausführungsform wird der erste Trigger T1 erst bei Vorliegen im Datenkommunikationsgerät DK dem ersten Speicherbereich S1 zugeordnet. In einer weiteren Ausführungsform wird die Zuordnung des ersten Triggers T1 zu dem ersten Speicherbereich S1 nach dem Auslesen der Werte W aufgehoben.

In einer weiteren Variante der vorangehend beschriebenen Ausgestaltung weist ein erster Trigger T1 eine Triggerklasse und ein zweiter T2 eine Triggerklasse auf. Sowohl der erste Speicherbereich S1 als auch der zweite Speicherbereich S1 ist einer Triggerklasse zugeordnet und jeder Triggerklasse ist mindestens eine Adresse zugeordnet. Ein Wert W eines Datums D wird in jedem Speicherbereich gespeichert, welcher der Triggerklasse zugeordnet ist, zu dem die Adresse des Datums zugeordnet ist, so dass aufgrund der Triggerklasse bzw. der Triggerklassen, welche der Adresse des Datums zugeordnet sind ein Wert W in dem ersten Speicherbereich S1 oder in dem zweiten Speicherbereich S2 oder identisch in beiden Speicherbereichen S1 und S2 gespeichert wird.

Die Erfindung wird nachfolgend unter Bezugnahme auf die Zeichnungen näher erläutert. Identische Bezeichnungen bedeuten hierbei gleichartige Teile. Darin zeigen die:
- Figur 1: eine schematische Ansicht auf eine erste erfindungsgemäße Ausführungsform eines Verfahrens zur Verarbeitung von Daten eines Steuergeräts in einem Datenkommunikationsgerät,
- Figur 2: eine schematische Ansicht auf eine zweite erfindungsgemäße Ausführungsform des Verfahrens, dargestellt ab dem Eintreffen eines ersten Triggers,
- Figur 3: eine schematische Ansicht auf eine dritte und vierte erfindungsgemäße Ausführungsform des Verfahrens mit priorisierten Triggern,
- Figur 4: eine schematische Ansicht auf eine fünfte erfindungsgemäße Ausführungsform des Verfahrens mit Zwischenspeicherung der Werte während des Auslesens eines Speicherbereichs, dargestellt ab dem Eintreffen des ersten Triggers,
- Figur 5: eine schematische Ansicht auf den strukturellen Aufbau eines Steuergeräts und eines erfindungsgemäßen Datenkommunikationsgeräts,
- Figur 6: eine schematische Ansicht auf den strukturellen Aufbau eines Steuergeräts und eines erfindungsgemäßen Datenkommunikationsgeräts mit einem vorgelagerten gemeinsamen Pufferspeicher,
- Figur 7: eine schematische Ansicht auf eine sechste erfindungsgemäße Ausführungsform des Verfahrens mit optionalem konsistenten Auslesen der Werte aus einem Speicherbereich,
- Figur 8: eine schematische Ansicht auf den strukturellen Aufbau eines Steuergeräts und eines Datenkommunikationsgeräts nach dem Stand der Technik,
- Figur 9: eine schematische Ansicht auf den strukturellen Aufbau eines Datums nach dem Stand der Technik.

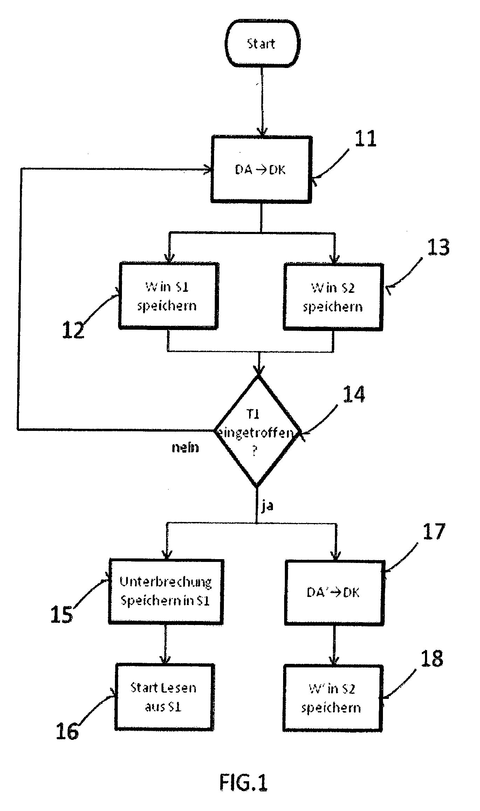

Die Abbildung der Figur 1 zeigt eine schematische Ansicht einer ersten Ausführungsform.

In einem ersten Verfahrensschritt 11 werden die Daten D von dem Steuergerät SG auf das Datenkommunikationsgerät DK über die Schnittstelle ST übertragen.

Der Wert W jedes Datums DA, das von dem Steuergerät SG übertragen wird, wird im Datenkommunikationsgerät DK sowohl gemäß einem Verfahrensschritt 12 im ersten Speicherbereich S1 gespeichert als auch gemäß einem Verfahrensschritt 13 im zweiten Speicherbereich S2 gespeichert. Hat das Datenkommunikationsgerät DK mehr als zwei Speicherbereiche, die zum Speichern der Daten D vorgesehen sind, wird vorzugsweise der Wert W jedes Datums DA ebenfalls in den weiteren Speicherbereichen gespeichert, sofern die weiteren Speicherbereiche nicht zum Speichern geblockt sind.

Zum Speichern eines Werts W an einer Adresse in mehreren Speicherbereich oder zum Auslesen der interessierenden Werte W aus einem Speicherbereich ist beispielsweise für jeden Speicherbereich eine Adressliste vorgesehen, über die eine Zuordnung zwischen der Adresse A des Datum DA und dem Speicherort des Werts W innerhalb des Speicherbereichs S1, S2 erfolgt. In einer anderen Ausführungsform gibt es eine gemeinsame Adressliste für alle Speicherbereiche und die Werte werden in jedem Speicherbereich an dieselbe Adresse geschrieben bzw. können unabhängig vom Speicherbereich von derselben Adresse gelesen werden. In einer weiteren bevorzugten Ausführungsform gibt es nur eine gemeinsame Adressliste für alle Speicherbereiche und es wird zu der Adresse des ersten Speicherbereichs ein Adresswert addiert, durch den die Adresse des zweiten Speicherbereichs erhalten wird. Ebenso wird beispielsweise für jeden weiteren Speicherbereich ein Adresswert addiert, durch den die Adresse des jeweiligen Speicherbereichs erhalten werden kann.

Anschließend prüft das Datenkommunikationsgerät DK in einem Verfahrensschritt 14, ob ein erster Trigger T1 vorliegt. Das Prüfen auf den Trigger T1 kann beispielsweise durch eine nicht dargestellte Kontroll-Einheit des Datenkommunikationsgeräts DK erfolgen.

Trigger werden bei vorher festgelegten Ereignissen erzeugt. Ein Ereignis ist beispielsweise das Schreiben an definierte Adressen des Speichers des Steuergeräts oder das Überschreiten eines Schwellwertes bezüglich eines Wertes. Ein Trigger wird zum Beispiel im Steuergerät SG erzeugt und vorzugsweise mit den Daten D an das Datenkommunikationsgerät DK übertragen. In einer anderen Ausgestaltung ist der Trigger ein Datensatz in den Daten D und wird durch eine insbesondere konfigurierbare Trigger-Erkennungs-Einheit des Datenkommunikationsgeräts DK in die Daten eingefügt. In einer weiteren Ausführungsform der Erfindung ist der Trigger ein Datum oder ein Datensatz.

Sofern bei Prüfung kein erster Trigger T1 im Datenkommunikationsgerät DK vorliegt, werden weiterhin die Werte W der vom Steuergerät SG übertragenen Daten D in den mehreren Speicherbereichen S1, S2 gespeichert.

Bei Vorliegen des ersten Triggers T1 liest das Datenkommunikationsgerät DK den insbesondere durch den ersten Trigger T1 festgelegten Teil der Werte W aus dem ersten Speicherbereich S1 aus, um die Werte W zu verarbeiten, beispielsweise zu messen, anzuzeigen oder zur Berechnung von Regelungs- oder Steuerungsfunktionen zu verwenden.

Um den vorzugsweise durch den ersten Trigger T1 festgelegten Teil der Werte W auszulesen und die Werte W nicht durch nach dem Vorliegen des ersten Triggers T1 im ersten Speicherbereich S1 gespeicherte Werte W' zu überschreiben, wird vor dem Auslesen des Teils der Werte W das Speichern weiterer Werte W' in den ersten Speicherbereich S1 in einem Verfahrensschritt 15 unterbrochen.

Nach der Unterbrechung des Speicherns in den ersten Speicherbereich S1 wird in einem Verfahrensschritt 16 das Auslesen der Werte W gestartet.

Gleichzeitig werden weitere Werte W' vom Steuergerät SG in einem Verfahrensschritt 17 übertragen. Die Werte W' werden in einem Verfahrensschritt 18 im zweiten Speicherbereich S2 oder nach einer weiteren Ausführungsform in den weiteren Speicherbereichen gespeichert.

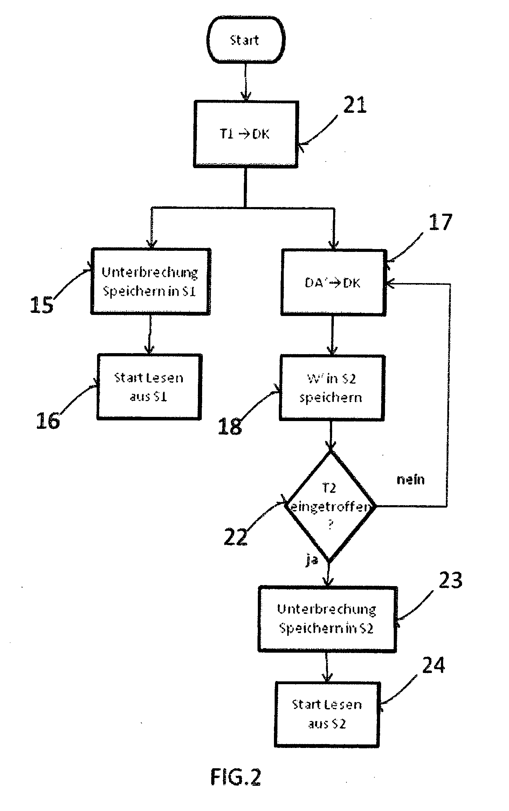

In der Abbildung der Figur 2 ist eine weitere Ausführungsform eines vorteilhaften Verfahrens zur Verarbeitung von Daten D eines Steuergeräts SG in einem Datenkommunikationsgerät DK dargestellt. Die Darstellung beginnt mit dem Vorliegen des ersten Triggers T1. Nicht dargestellt sind die Verfahrensschritte 11 bis 14, die wie bei dem ersten Ausführungsbeispiel der Verarbeitung von Werten W des ersten Speicherbereichs S1 bei Vorliegen eines ersten Trigger T1 vorgelagert sind.

In einem Verfahrensschritt 21 liegt ein erster Trigger T1 im Datenkommunikationsgerät DK vor und wird von dem Datenkommunikationsgerät DK als erster Trigger identifiziert.

Entsprechend der Verfahrensschritte 15 und 16 des ersten Ausführungsbeispiels wird das Speichern von weiteren Werten W', die nach dem Vorliegen des ersten Triggers T1 das Datenkommunikationsgerät DK erreichen, unterbrochen und das Auslesen der Werte W gestartet, während weitere Werte W', die in dem Verfahrensschritt 17 an das Datenkommunikationsgerät DK übertragen werden, durch den Verfahrensschritt 18 in dem Speicherbereich S2 gespeichert werden.

Anschließend wird im Verfahrensschritt 22 vorzugsweise in gleicher Weise wie bei dem Verfahrensschritt 14 des ersten Ausführungsbeispiels von dem Datenkommunikationsgerät DK geprüft, ob ein zweiter Trigger T2 vorliegt.

Liegt kein zweiter Trigger T2 vor, werden weiterhin die Werte W' der vom Steuergerät SG übertragenen Daten D im zweiten Speicherbereich S2 bzw. in den weiteren Speicherbereichen gespeichert.

Liegt ein zweiter Trigger T2 vor, wird das Speichern in den zweiten Speicherbereich S2 gemäß eines Verfahrensschritts 23 unterbrochen und das Auslesen aus dem zweiten Speicherbereich S2 in einem Verfahrensschritt 24 gestartet.

Sofern das Datenkommunikationsgerät DK mehr als zwei Speicherbereiche aufweist, wird das Verfahren vorzugsweise um die Ausführung der Verfahrensschritte 21-24 für jeden weiteren Speicherbereich und jeden weiteren Trigger ergänzt.

In einer weiteren nicht dargestellten Ausführungsform erfolgt das Auslesen von Werten aus den Speicherbereichen des Datenkommunikationsgeräts parallel mit mehreren Datenerfassungseinheiten. Eine Datenerfassungseinheit ist beispielsweise ein FPGA, ein separater Prozessor oder ein Core eines Multicore-Prozessors. Durch eine erste Datenerfassungseinheit werden bei Vorliegen eines ersten Triggers T1 die Werte W aus dem ersten Speicherbereich S1 ausgelesen und durch eine zweite Datenerfassungseinheit bei Vorliegen eines zweiten Triggers T2 die Werte W aus dem zweiten Speicherbereich S2 unabhängig vom Auslesevorgang aus dem ersten Speicherbereich S1 ausgelesen.

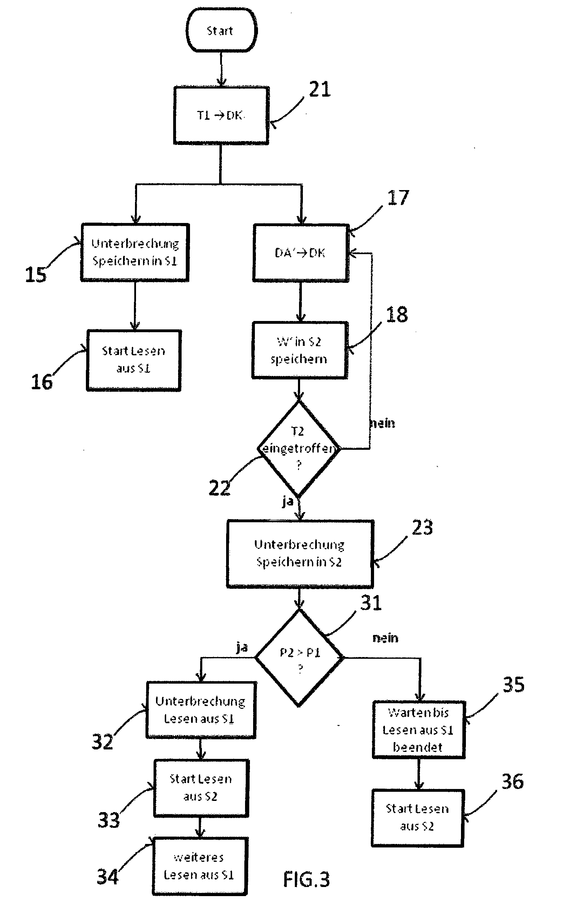

In der Abbildung der Figur 3 ist eine weitere Ausführungsform eines vorteilhaften Verfahrens zur Verarbeitung von Daten D eines Steuergeräts SG in einem Datenkommunikationsgerät DK dargestellt. Im Folgenden werden nur die Unterschiede zu der Abbildung der Figur 2 erläutert.

In dem Ausführungsbeispiel zu Figur 3 ist einem Trigger T1 eine erste Priorität P1 und einem Trigger T2 eine zweite Priorität P2 zugeordnet. Eine höhere Priorität steht dabei für ein vorrangiges Auslesen der dem höher priorisierten Trigger zugeordneten Werte W.

Nach der Unterbrechung des Speicherns in den zweiten Speicherbereich S2 gemäß dem Verfahrensschritt 23 prüft das Datenkommunikationsgerät DK in einem Verfahrensschritt 31, ob die erste Priorität P2 des Triggers T2 höher als die zweite Priorität P1 des ersten Triggers T1 ist.

Ist die Priorität nicht höher, erfolgt in einem Verfahrensschritt 36 ein Auslesen der Werte W aus dem zweiten Speicherbereich S2 erst nach dem vollständigen Auslesen der Werte W aus dem ersten Speicherbereich gemäß einem Verfahrensschritt 35.

Ist die zweite Priorität P2 des Triggers T2 höher als die erste Priorität P1 des ersten Triggers T1, wird nach Verfahrensschritt 32 das Auslesen der Werte W aus dem ersten Speicherbereich S1 unterbrochen. Anschließend werden in einem Verfahrensschritt 33 die Werte W aus dem zweiten Speicherbereich S2 ausgelesen.

Nach einer weiteren Ausführungsform wird erst nach dem vollständigen Auslesen der Werte W aus dem zweiten Speicherbereich S2 in einem Verfahrensschritt 34 das weitere Auslesen der Werte W aus dem ersten Speicherbereich S1 wieder gestartet.

In einer weiteren nicht dargestellten Ausführungsform ist bei mehr als zwei Speicherbereichen auch das mehrfache Unterbrechen des Auslesens eines Speicherbereichs möglich, z.B. ausgelöst durch höher priorisierte Trigger an einem weiteren Speicherbereich oder an mehreren weiteren Speicherbereichen.

In einer bevorzugten Ausführungsform wird im Falle, dass mehr Auslesevorgänge durchgeführt werden sollen als Datenerfassungseinheiten verfügbar sind, der Auslesevorgang, dessen Trigger die niedrigsten Prioritäten zugeordnet ist, unterbrochen und ein Auslesevorgang, dessen Trigger eine höhere Priorität zugeordnet ist, gestartet.

In einer weiteren Ausführungsform werden die aus einem der Speicherbereiche des Datenkommunikationsgeräts ausgelesenen Werte an ein Datenverarbeitungsgerät zur weiteren Verarbeitung übertragen. In einer bevorzugten Ausführungsform werden die ausgelesenen Werte priorisiert an das Datenverarbeitungsgerät übertragen, so dass ausgelesene Werte, deren zugeordneter Trigger eine niedrigere Priorität hat als ein Trigger eines noch nicht beendeten Auslesevorgangs, erst dann an das Werkzeug übertragen werden, wenn die Werte des noch nicht beendeten Auslesevorgangs, denen der höher priorisierte Trigger zugeordnet ist, an das Datenverarbeitungsgerät übertragen wurden.

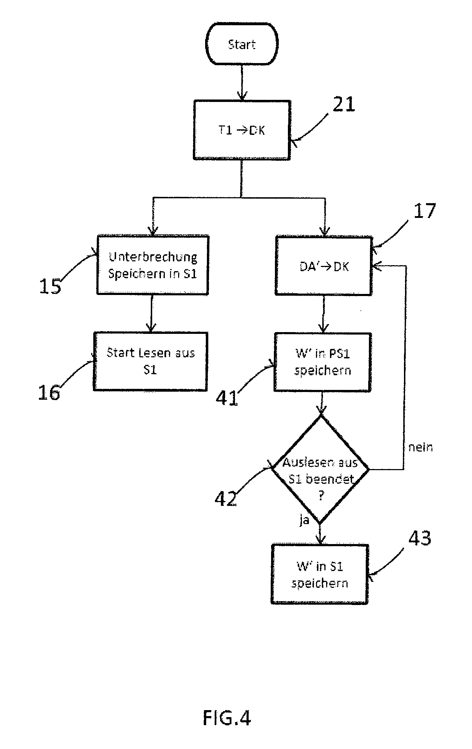

In der Abbildung der Figur 4 ist eine weitere Ausführungsform eines vorteilhaften Verfahrens zur Verarbeitung von Daten D eines Steuergeräts SG in einem Datenkommunikationsgerät DK dargestellt.

Dabei entsprechen die Verfahrensschritte 21 und 15 bis 17 den Verfahrensschritten 21 und 15 bis 17 des Ausführungsbeispiels zu Figur 2.

In einem weiteren Verfahrensschritt 41 werden weitere Werte W' von Daten DA', die nach der Unterbrechung des ersten Speicherbereichs S1 vom Steuergerät SG an das Datenkommunikationsgerät DK übertragen werden, zusätzlich zu der Speicherung in weiteren Speicherbereichen S2 in einem dem ersten Speicherbereich S1 zugeordneten Pufferspeicher PS1 zwischengespeichert. Ein solcher Pufferspeicher ist vorzugsweise als First-In-First-Out-Speicher (FIFO) ausgebildet. Zum Beispiel ist der Pufferspeicher ein separater Speicher oder ein Speicherbereich eines Speichers beispielsweise mit einem Eingang und mehreren Ausgängen.

In einem Verfahrensschritt 42 wird überprüft, ob das Auslesen der Werte W aus dem ersten Speicherbereich S1 beendet ist.

Erst nach dem das vollständigen Auslesen der relevanten Werte W aus dem ersten Speicherbereich S1 werden die weiteren Werte W' in einem Verfahrensschritt 43 in den ersten Speicherbereich S1 gespeichert.

In einer bevorzugten Ausführungsform weist das Datenkommunikationsgerät DK für jeden Speicherbereich einen Pufferspeicher auf. Beispielsweise werden in dem Pufferspeicher die Werte vor dem Speichern in einen der Speicherbereiche zwischengespeichert. Insbesondere bei Unterbrechung des Speicherns von Werten W in den ersten Speicherbereich S1 werden die weiteren Werte W' in den ersten Pufferspeicher PS1 und bei Unterbrechung des Speicherns von Werten W in den zweiten Speicherbereich S2 werden weitere Werte W' in einen zweiten Pufferspeicher PS2 geschrieben. Bei weiteren Speicherbereichen werden entsprechend bei einer Unterbrechung weitere Werte in weitere Pufferspeicher gespeichert.

Kommt in einer weiteren Ausführungsform bei einem Datenkommunikationsgerät DK ein Trigger an, während alle vorhandenen Speicherbereiche das Speichern von Werten unterbrochen haben, erfolgt das Auslesen der zu diesem Trigger gehörenden Werte W erst nach Speicherung der weiteren Werte W' aus einem der Pufferspeicher in den zugeordneten Speicherbereich.

In einer weiteren Ausführungsform wird ein Trigger einem Speicherbereich zugeordnet. Beispielsweise wird die Zuordnung gespeichert oder mit dem Trigger verknüpft.

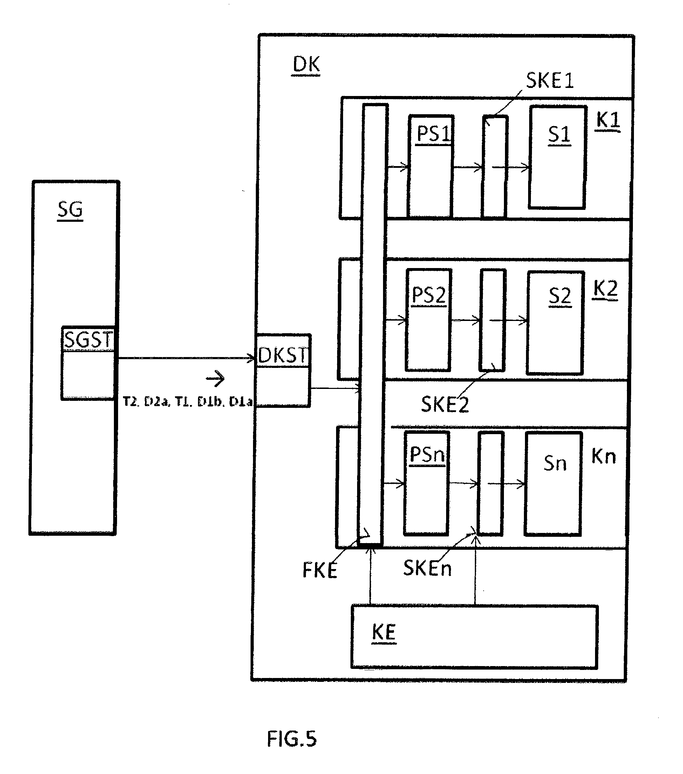

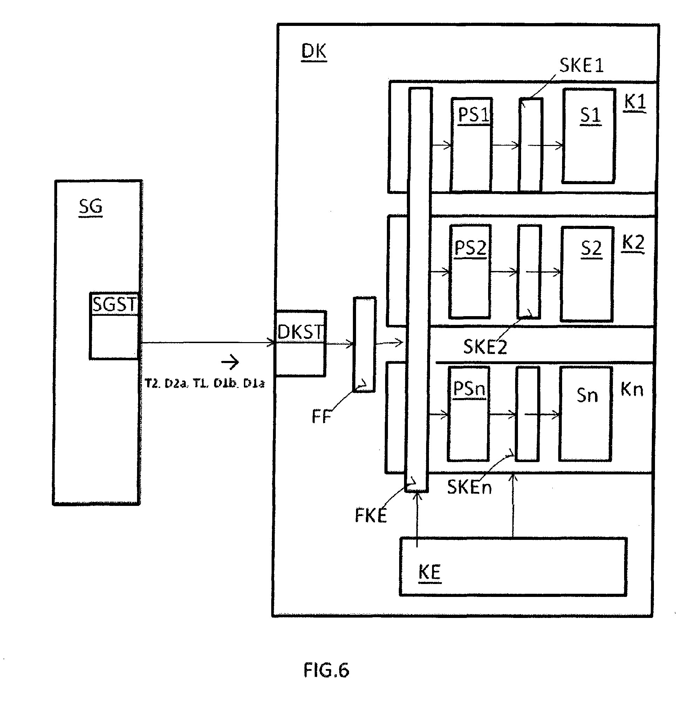

Zu dieser Ausführungsform und der Ausführungsform der den Speicherbereichen zugeordneten Pufferspeichern zählt das folgende Implementierungsbeispiel. Der entsprechende Aufbau des Systems ist in Figur 5 und Figur 6 dargestellt. Im Folgenden sei n beliebig größer 1. Ein Datenkommunikationsgerät DK hat n Speicherkänale, wobei ein beliebiger Speicherkanal der n Speicherkanäle als Speicherkanal Kx bezeichnet wird. Der Speicherkanal Kx besteht aus einem Fifo PSx, also First-in-first-out-Speicher, der als Pufferspeicher dient, einer Speicher-Kontroll-Einheit SKx und einem Speicherbereich Sx.

Start-Annahme:
- Der Speicherbereich Sx ist nicht für das Speichern von Werten gesperrt.
- Die Speicher-Kontroll-Einheit SKx ist auf Durchgang geschaltet und leitet Daten des Fifo PSx in den jeweils zugehörigen Speicherbereich Sx weiter.
- Der Fifo PSx ist leer.

Verfahrensschritte:
1. Das Steuergerät SG schreibt das Datum D1a in den Steuergeräte-Speicher und sendet dieses Datum über die Steuergeräte-Trace-Schnittstelle SGST an die Trace-Schnittstelle des Datenkommunikationsgeräts DKST.
2. Das Datum D1a wird von einer Fifo-IN-Kontroll-Einheit FKE entgegengenommen. Da es sich um einen normales Datum handelt, wird der Wert in die Fifos PS1 bis PSn geschrieben.
3. Die jeweiligen Speicher-Kontroll-Einheiten SKx entnehmen jeweils aus den ihnen zugeordneten Fifos PSx den Wert von D1a und schreiben ihn in den zugehörigen Speicherbereich Sx.
   Dabei arbitrieren sich die Speicher-Kontroll-Einheiten Sk1 bis SKn bei der Übertragung der Daten vom Fifo PSx in den Speicherbereich Sx, was zur Folge hat, dass die Speicher-Kontroll-Einheiten Sk1 bis SKn abwechselnd den Wert von D1a an die jeweiligen Speicherbereiche Sx übertragen. Alternativ können bei Speicherbereichen mit jeweils unterschiedlichen Eingängen die Speicher-Kontroll-Einheiten Sk1 bis SKn die Werte parallel in die Speicherbereiche S1 bis Sn schreiben.
4. Sobald jede Speicher-Kontroll-Einheit SK1 bis SKn einmal an die Reihe gekommen ist, befindet sich der Datensatz D1a in allen Speicherbereichen S1 bis Sn.
5. Während dieses Ablaufes oder zu einem späteren Zeitpunkt schreibt das Steuergerät SG weitere Daten D1b, D1c. Diese Daten werden in gleicher Weise bearbeitet.
6. Beispielsweise ist das Datum D1d ein konfiguriertes Trigger-Ereignis. In diesem Fall wird durch das Datenkommunikationsgerät DK der Eintrag T1 in die Daten D eingefügt.
7. Dieser Eintrag wird nun von der Fifo-IN-Kontroll-Einheit FKE entgegengenommen. Die Fifo-IN-Kontroll-Einheit FKE prüft, welcher Speicherkanal Kx frei ist. Beispielsweise wird Speicherkanal K1 gewählt. Der Trigger T1 wird nun mit einer Zusatzinformation K1 versehen und als T1/K1 in die Fifos PS1 bis PSn geschrieben, damit der Trigger T1 nur einmal das Auslesen der bezüglich des ersten Trigger T1 relevanten Werte W auslöst. Sofern PS1 bis PSn getrennte Fifos sind, reicht auch das Schreiben in den gewählten Speicher-Kanal Fifo PS1. In einer weiteren Kontroll-Einheit KE wird die Information gespeichert, dass der Speicher-Kanal K1 durch den Trigger T1 belegt ist.
8. Während der Schritte 6 und 7 werden weitere Daten D2x an das Datenkommunikationsgerät DK übertrage, die ebenfalls in die Fifos PS1 bis PSn übertragen werden.
9. Wenn bei der Fifo-IN-Kontroll-Einheit FKE der Trigger T2 eintrifft, ermittelt die der Fifo-IN-Kontroll-Einheit FKE über die weitere Kontroll-Einheit KE, dass der Speicher-Kanal K1 für den Trigger T2 nicht zur Verfügung steht. Für den Trigger T2 wird nun beispielsweise der Speicher-Kanal K2 gewählt und die Trigger-Information T2/K2 in die Fifos PS1 bis PSx geschrieben. In einer bevorzugten Variante wird der Kanal Kx mit der geringsten Auslastung gewählt, wobei die geringste Auslastung beispielsweise anhand des geringsten Füllstands des Fifo PSx ermittelt wird.
10. Wenn weitere Trigger Tx empfangen werden, wird nach diesem Verfahren fortgefahren. Im Falle, dass alle vorhandenen Speicher-Kanäle K1 bis Kn belegt sein sollten, wartet die Fifo-IN-Kontroll-Einheit FKE, dass ein Speicher-Kanal Kx frei wird. Vorteilhafter Weise speichert die Fifo-IN-Kontroll-Einheit FKE den Trigger Tx in einem dafür vorgesehenen Fifo FF ab. In einer besonders vorteilhaften Implementierung wird der Fifo FF auf seinen Füllstand überwacht und bei drohendem Überlauf wird die Blockierung des Schreibens der Werte in die Speicherbereiche S1 bis Sn aufgehoben. Dadurch gelangen zwar in die Speicherbereiche S1 bis Sn weitere Werte und ein konsistentes Auslesen wird eventuell verhindert. Sofern es sich um eine kurzzeitige Überlastung handelt und der Fifo FF keinen Datenverlust hatte, können zu einem späteren Zeitpunkt wieder konsistente Werte ausgelesen werden. Wird die Blockierung nicht aufgehoben ist im Falle eines Datenverlusts je nach verlorenem Datum kein konsistentes Auslesen mehr möglich und das Steuergerät SG müsste neu gestartet werden oder ein gesonderter Datenabgleich des Steuergeräte-Speichers mit den Speicherbereichen S1 bis Sn durchgeführt werden.
11. Auf der Fifo-Ausgangsseite in der Speicher-Kontroll-Einheit SKx werden parallel zu den Schritten 8 bis 10 folgende Schritte ausgeführt:
12. Bei der Speicher-Kontroll-Einheit SK1 kommt der Datensatz T1/K1 an. Da die Speicher-Kontroll-Einheit SK1 und T1/K1 gleichlautende Kennungen "1" besitzen, erkennt die Speicher-Kontroll-Einheit SK1, dass der Trigger T1 für den Speicher-Kanal K1 bestimmt ist. Bei den Kanälen K2 bis Kn wird erkannt, dass der Trigger T1 nicht für die Kanäle bestimmt ist und wird verworfen.
   Die Speicher-Kontroll-Einheit SK1 nimmt hingegen die Triggerinformation des Triggers T1 und blockiert den Speicherbereich S1 für weitere Schreibzugriffe. Über die weitere Kontroll-Einheit KE wird ein Auslesen der relevanten Werte W aus dem ersten Speicherbereich S1 gestartet.
   In einer alternativen Ausführungsform wird die Belegung eines Kanals für einen Trigger außerhalb der Kanäle gespeichert.
13. Sobald das Auslesen aus dem ersten Speicherbereich S1 beendet ist, wird über die weitere Kontroll-Einheit KE die Speicher-Kontroll-Einheit SK1 und die Fifo-IN-Kontroll-Einheit FKE über das Ende des Auslesevorgangs informiert.
   Die Speicher-Kontroll-Einheit SK1 gibt das Schreiben von weiteren Werten W' in den Speicherbereich S1 frei und die Fifo-IN-Kontroll-Einheit FKE gibt den Speicher-Kanal K1 für weitere Trigger frei.
14. Ein zweiter Trigger T2 wird in dem Speicherkanal K2 wie der erste TriggerT1 behandelt.

Unabhängig von dem vorangehenden Beispiel kann in einer weiteren Ausführungsform zusätzlich zu den Pufferspeichern, welche den Speicherbereichen zugeordnet sind ein vorgelagerter Pufferspeicher FF, insbesondere ein Fifo, vorgesehen sein.

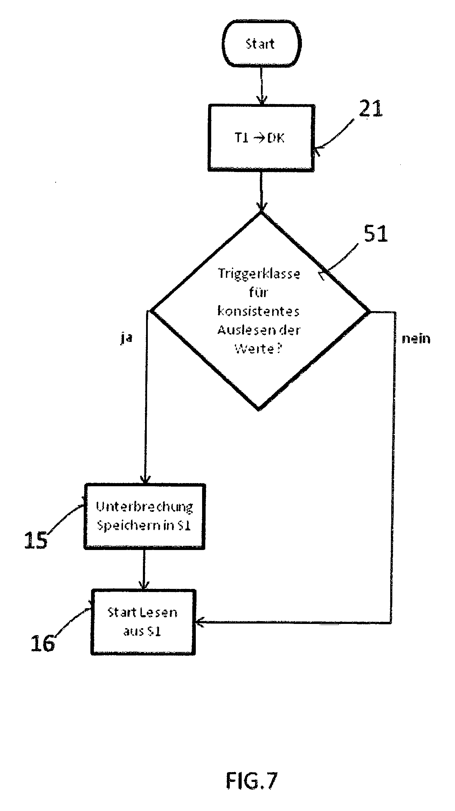

In einer weiteren alternativen Ausführungsform, dargestellt in Figur 7, hat jeder Trigger eine Triggerklasse, wobei eine Triggerklasse beispielsweise durch eine Triggernummer festgelegt ist. In Abhängigkeit von der Triggerklasse werden die Werte konsistent oder nicht konsistent ausgelesen. Dazu wird bei Triggern mit Triggerklasse zum konsistenten Auslesen der entsprechende Speicherbereich zum Auslesen der relevanten Werte gesperrt. Bei einem Trigger von der Triggerklasse, der kein konsistentes Auslesen der zugehörigen Werte benötigt, werden die dem Trigger zugeordneten Werte aus dem Speicherbereich ausgelesen ohne dass das Schreiben in den Speicherbereich unterbrochen wird.

In einer weiteren nicht dargestellten Ausführungsform kann das Auslesen von Werten aus einem Speicherbereich durch ein Schreiben von Daten durch das Datenkommunikationsgerät in das Steuergerät, im Folgenden Stimulation genannt, unterbrochen werden.

In einer weiteren nicht dargestellten Ausführungsform erfolgt die Stimulation von Daten durch das Datenkommunikationsgerät parallel zu dem Auslesen von Werten aus einem Speicherbereich.

Ein Stimulus wird beispielsweise durch einen Stimulus-Trigger ausgelöst. In einer weiteren Ausführungsform ist jedem Stimulus-Trigger eine Priorität zugeordnet. In einer bevorzugten Ausführungsform kann ein Stimulus einen anderen Stimulus unterbrechen, sofern der Stimulus-Trigger des ersten Stimulus eine höhere Priorität als der Stimulus-Trigger des zweiten Stimulus besitzt. In einer anderen Ausführungsform kann ein Stimulus, dessen Stimulus-Trigger eine höhere Priorität hat als ein Trigger zum Auslesen von Werten, das Auslesen von Werten unterbrechen.

## Patentansprüche

1. Verfahren zur Verarbeitung von Daten (D) eines Steuergeräts (SG) in einem Datenkommunikationsgerät (DK), wobei
das Datenkommunikationsgerät (DK)
einen ersten Speicherbereich (S1) und einen zweiten Speicherbereich (S2) aufweist, und
mit dem Steuergerät (SG) über eine Schnittstelle (ST) verbunden ist,
die Daten (D) von dem Steuergerät (SG) über die Schnittstelle (ST) an das Datenkommunikationsgerät (DK) übertragen werden,
jedes Datum (DA) der Daten (D) eine Adresse (A) und einen Wert (W) aufweist,
ein Wert (W) identisch im ersten Speicherbereich (S1) und im zweiten Speicherbereich (S2) gespeichert wird,
von dem Datenkommunikationsgerät (DK) geprüft wird, ob ein erster Trigger (T1) vorliegt,
**dadurch gekennzeichnet, dass**
- bei dem Vorliegen des ersten Triggers (T1) das Speichern im ersten Speicherbereich (S1) unterbrochen wird oder bei dem ersten Trigger die Triggerklasse geprüft wird und bei Vorliegen einer vorgegebenen Triggerklasse das Speichern im ersten Speicherbereich (S1) unterbrochen wird,
- aus dem ersten Speicherbereich (S1) Werte (W) der im ersten Speicherbereich gespeicherten Daten (D) ausgelesen werden und
- von dem Datenkommunikationsgerät (DK) weitere, zeitlich nach dem ersten Trigger (T1) eintreffende Werte (W') in dem zweiten Speicherbereich (S2) gespeichert werden.

2. Verfahren nach Anspruch 1, **dadurch gekennzeichnet, dass** jeder Wert (W) bis zum Vorliegen des ersten Triggers (T1) identisch im ersten Speicherbereich (S1) und im zweiten Speicherbereich (S2) gespeichert wird.

3. Verfahren nach Anspruch 1 oder Anspruch 2, **dadurch gekennzeichnet, dass** von dem Datenkommunikationsgerät (DK) geprüft wird, ob ein zweiter Trigger (T2) vorliegt und
bei dem Vorliegen des zweiten Triggers (T2) das Speichern im zweiten Speicherbereich (S2) unterbrochen wird und aus dem zweiten Speicherbereich (S2) Werte (W) der Daten (D) ausgelesen werden.

4. Verfahren nach Anspruch 3, **dadurch gekennzeichnet, dass** das Datenkommunikationsgerät (DK) eine erste Datenerfassungseinheit und eine zweite Datenerfassungseinheit aufweist und durch die erste Datenerfassungseinheit bei dem Vorliegen des ersten Triggers (T1) die Werte (W) aus dem ersten Speicherbereich (S1) ausgelesen werden und durch die zweite Datenerfassungseinheit bei dem Vorliegen des zweiten Triggers (T2) die Werte (W) aus dem zweiten Speicherbereich ausgelesen werden.

5. Verfahren nach Anspruch 3, **dadurch gekennzeichnet, dass** der erste Trigger (T1) eine erste Priorität (P1) und
der zweite Trigger (T2) eine zweite Priorität (P2) hat,
das Auslesen der Werte (W) des ersten Speicherbereichs (S1) unterbrochen wird und das Auslesen der Werte (W) des zweiten Speicherbereichs (S2) gestartet wird, wenn die zweite Priorität (P2) höher als die erste Priorität ist.

6. Verfahren nach Anspruch 5, **dadurch gekennzeichnet, dass** nach dem das Auslesen der Werte (W) des zweiten Speicherbereichs (S2) das Auslesen der Werte (W) des ersten Speicherbereichs (S1) fortgesetzt wird.

7. Verfahren nach einem der vorherigen Ansprüche, **dadurch gekennzeichnet, dass** dem ersten Trigger (T1) Adressen des ersten Speicherbereichs (S1) und / oder des zweiten Speicherbereichs (S2) zugeordnet sind und bei Vorhandensein eines zweiten Triggers (T2) dem zweiten Trigger (T2) Adressen des ersten Speicherbereichs (S1) und / oder des zweiten Speicherbereichs (S2) zugeordnet sind.

8. Verfahren nach Anspruch 7, **dadurch gekennzeichnet, dass** das Datenkommunikationsgerät (DK) mit einem Datenverarbeitungsgerät verbunden ist und mittels des Datenkommunikationsgeräts (DK) Daten an das Datenverarbeitungsgerät übertragen werden, wobei aus dem ersten Speicherbereich (S1) oder aus dem zweiten Speicherbereich (S2) ausgelesene Werte, deren Adressen dem erster Trigger (T1) zugeordnet sind und dieser eine niedrigere Priorität hat als der zweite Trigger (T2) eines noch nicht beendeten Auslesevorgangs, erst dann an das Datenverarbeitungsgerät übertragen werden, wenn die Werte (W), deren Adressen dem zweiten Trigger (T2) zugeordnet sind, an das Datenverarbeitungsgerät übertragen wurden.

9. Verfahren nach einem der vorherigen Ansprüche, **dadurch gekennzeichnet, dass** das Datenkommunikationsgerät (DK) einen ersten Pufferspeicher (PS1) aufweist, der dem ersten Speicherbereich (S1) zugeordnet ist, und während der Unterbrechung des Speicherns in den ersten Speicherbereich (S1) zeitlich nach dem ersten Trigger (T1) eintreffende Werte (W') der Daten im ersten Pufferspeicher (PS1) zwischengespeichert werden, und
die zwischengespeicherten Werte (W') der Daten nach dem Auslesen aus dem ersten Speicherbereich (S1) in den ersten Speicherbereich (S1) gespeichert werden.

10. Verfahren nach Anspruch 9, **dadurch gekennzeichnet, dass** dem ersten Speicherbereich (S1) ein erster Pufferspeicher (PS1) zugeordnet ist und dem zweiten Speicherbereich (S2) ein zweiter Pufferspeicher (PS2), wobei der erste Pufferspeicher (PS1) und der zweite Pufferspeicher (PS2) jeweils als ein separater Speicher oder als ein Teil eines Speichers mit mehreren Ausgängen ausgebildet ist.

11. Verfahren nach Anspruch 9 oder Anspruch 10, **dadurch gekennzeichnet, dass** dem ersten Pufferspeicher (PS1) und dem zweiten Pufferspeicher (PS2) ein gemeinsamer dritter Pufferspeicher (PS3) vorgelagert ist.

12. Verfahren nach einem der vorherigen Ansprüche, **dadurch gekennzeichnet, dass** ein Wert
in dem ersten Speicherbereich (S1) eine erste Speicheradresse erhält,
in dem zweiten Speicherbereich (S2) eine zweite Speicheradresse erhält, wobei für einen Wert die Adresse des zweiten Speicherbereichs (S2) erhalten wird, indem zur ersten Speicheradresse ein vorgegebener Adresswert addiert wird.

13. Verfahren nach einem der vorherigen Ansprüche, **dadurch gekennzeichnet, dass** der erste Trigger (T1) bei Vorliegen im Datenkommunikationsgerät (DK) genau dem ersten Speicherbereich (S1) zugeordnet ist, der zweite Trigger (T2) bei Vorliegen im Datenkommunikationsgerät (DK) genau dem zweiten Speicherbereich (S2) zugeordnet ist und bei Vorliegen des ersten Triggers (T1) die Werte (W) nur aus dem ersten Speicherbereich (S1) ausgelesen werden und bei Vorliegen des zweiten Triggers (T2) die Werte (W) nur aus dem zweiten Speicherbereich (S2) ausgelesen werden.

14. Verfahren nach Anspruch 13, **dadurch gekennzeichnet, dass** die Zuordnung des ersten Triggers (T1) zu dem ersten Speicherbereich (S1) nach dem Auslesen der Werte (W) aus dem ersten Speicherbereich (S1) aufgehoben wird.

## Claims

1. A method for processing data (D) of a controller (SG) in a data communications device (DK), the data communications device (DK)
comprising a first memory area (S1) and a second memory area (S2) and
being connected to the controller (SG) by means of an interface (ST),
the data (D) being transmitted from the controller (SG) via the interface (ST) to the data communications device (DK), each datum (DA) of the data (D) comprising an address (A) and a value (W),
a value (W) being stored identically in the first memory area (S1) and in the second memory area (S2), and the data communications device (DK) checking whether a first trigger (T1) is present,
**characterized in that**
- the storing in the first memory area (S1) is interrupted if the first trigger (T1) is present, or the trigger class is checked for the first trigger and the storing in the first memory area (S1) is interrupted if a prescribed trigger class is present,
- values (W) of the data (D) stored in the first memory area are read out from the first memory area (S1), and
- further values (W') arriving from the data communications device (DK) chronologically after the first trigger (T1) are stored in the second memory area (S2).

2. The method according to claim 1, **characterized in that** each value (W) is stored identically in the first memory area (S1) and in the second memory area (S2) until the first trigger (T1) is present.

3. The method according to claim 1 or claim 2, **characterized in that** the data communications device (DK) checks whether a second trigger (T2) is present and
if the second trigger (T2) is present then the storing in the second memory area (S2) is interrupted and values (W) of the data (D) are read out from the second memory area (S2).

4. The method according to claim 3, **characterized in that** the data communications device (DK) comprises a first data acquisition unit and a second data acquisition unit and if the first trigger (T1) is present then the values (W) are read out from the first memory area (S1) by the first data acquisition unit, and if the second trigger (T2) is present then the values (W) are read out from the second memory area by the second data acquisition unit.

5. The method according to claim 3, **characterized in that** the first trigger (T1) comprises a first priority (P1) and
the second trigger (T2) comprises a second priority (P2),
and if the second priority (P2) is higher than the first priority then the reading out of the values (W) from the first memory area (S1) is interrupted and the reading out of the values (W) from the second memory area (S2) is started.

6. The method according to claim 5, **characterized in that** after the values (W) of the second memory area (S2) are read out the reading out of the values (W) of the first memory area (S1) is continued.

7. The method according to any one of the preceding claims, **characterized in that** addresses of the first memory area (S1) and/or of the second memory area (S2) are associated with the first trigger (T1) and if a second trigger (T2) is present then addresses of the first memory area (S1) and/or of the second memory area (S2) are associated with the second trigger (T2).

8. The method according to claim 7, **characterized in that** the data communications device (DK) is connected to a data processing device and data are transmitted to the data processing device by means of the data communications device (DK), wherein values read out from the first memory area (S1) or from the second memory area (S2) having addresses associated with the first trigger (T1) and said first trigger having a lower priority than the second trigger (T2) of a readout event that has not yet been completed are not transmitted to the data processing device until the values (W) having addresses associated with the second trigger (T2) have been transmitted to the data processing device.

9. The method according to any one of the preceding claims, **characterized in that** the data communications device (DK) comprises a first buffer memory (PS1) associated with the first memory area (S1) and values (W') of the data arriving during the interrupting of the storing in the first memory area (S1) and chronologically after the first trigger (T1) are intermediately stored in the first buffer memory (PS1), and the intermediately stored values (W') of the data are stored in the first memory area (S1) after the readout from the first memory area (S1).

10. The method according to claim 9, **characterized in that** a first buffer memory (PS1) is associated with the first memory area (S1) and a second buffer memory (PS2) is associated with the second memory area (S2), wherein the first buffer memory (PS1) and the second buffer memory (PS2) are each implemented as a separate memory or as a part of a memory having a plurality of outputs.

11. The method according to claim 9 or claim 10, **characterized in that** a common third buffer memory (PS3) is disposed upstream of the first buffer memory (PS1) and the second buffer memory (PS2).

12. The method according to any one of the preceding claims, **characterized in that** a value in the first memory area (S1) receives a first memory address and in the second memory area receives a second memory address, wherein the address of the second memory area (S2) is obtained for a value by adding a prescribed address value to the first memory address.

13. The method according to any one of the preceding claims, **characterized in that** the first trigger (T1) is precisely associated with the first memory area (S1) if present in the data communications device (DK), and the second trigger (T2) is precisely associated with the second memory area (S2) if present in the data communications device (DK), and if the first trigger (T1) is present then the values (W) are read out only from the first memory area (S1) and if the second trigger (T2) is present then the values (W) are read out only from the second memory area (S2).

14. The method according to claim 13, **characterized in that** the association of the first trigger (T1) with the first memory area (S1) is canceled after the values (W) have been read out from the first memory area (S1).

## Revendications

1. Procédé pour traiter des données (D) d'un appareil de commande (SG) dans un appareil de communication de données (DK), dans lequel
l'appareil de communication de données (DK)
présente une première zone de mémoire (S1) et une seconde zone de mémoire (S2), et
est relié à l'appareil de commande (SG) via une interface (ST),
les données (D) sont transmises de l'appareil de commande (SG) à l'appareil de communication de données (DK) via l'interface (ST),
chaque date (DA) des données (D) présente une adresse (A) et une valeur (W),
une valeur (W) identique dans la première zone de mémoire (S1) et dans la seconde zone de mémoire (S2) est mémorisée,
l'appareil de communication des données (DK) vérifie si un premier déclencheur (T1) est présent,
**caractérisé en ce que**
- si le premier déclencheur (T1) est présent, la mémorisation dans la première zone de mémoire (S1) est interrompue ou la classe de déclencheur est vérifiée dans le premier déclencheur et si une classe de déclencheur prédéterminée est présente, la mémorisation dans la première zone de mémoire (S1) est interrompue,
- depuis la première zone de mémoire (S1), les valeurs (W) des données (D) mémorisées dans la première zone de mémoire sont lues et
- des valeurs supplémentaires (W') arrivant dans le temps après le premier déclencheur (T1) sont mémorisées dans la seconde zone de mémoire (S2) par l'appareil de communication de données (DK).

2. Procédé selon la revendication 1, **caractérisé en ce que**
chaque valeur (W) est mémorisée identiquement dans la première zone de mémoire (S1) et dans la seconde zone de mémoire (S2) jusqu'à la présence du premier déclencheur (T1).

3. Procédé selon la revendication 1 ou la revendication 2, **caractérisé en ce que** l'appareil de communication de données (DK) vérifie si un second déclencheur (T2) est présent et
en cas de présence du second déclencheur (T2), la mémorisation dans la seconde zone de mémoire (S2) est interrompue et les valeurs (W) des données (D) sont lues depuis la seconde zone de mémoire (S2).

4. Procédé selon la revendication 1, **caractérisé en ce que** l'appareil de communication de données (DK) présente une première unité de saisie de données et une seconde unité de saisie de données et la première unité de saisie de données, en cas de présence du premier déclencheur (T1), lit les valeurs (W) depuis la première zone de mémoire (S1) et la seconde unité de saisie de données, en cas de présence du second déclencheur (T2), lit les valeurs (W) depuis la seconde zone de mémoire.

5. Procédé selon la revendication 3, **caractérisé en ce que** le premier déclencheur (T1) a une première priorité (P1) et
le second déclencheur (T2) a une seconde priorité (P2),
la lecture des valeurs (W) de la première zone de mémoire (S1) est interrompue et la lecture des valeurs (W) de la seconde zone de mémoire (S2) est démarrée si la seconde priorité (P2) est supérieure à la première priorité.

6. Procédé selon la revendication 5, **caractérisé en ce que**
après la lecture des valeurs (W) de la seconde zone de mémoire (S2), la lecture des valeurs (W) de la première zone de mémoire (S1) est poursuivie.

7. Procédé selon l'un des revendications précédentes, **caractérisé en ce que** des adresses de la première zone de mémoire (S1) et/ou de la seconde zone de mémoire (S2) sont attribuées au premier déclencheur (T1) et, en cas de présence d'un second déclencheur (T2), des adresses de la première zone de mémoire (S1) et/ou de la seconde zone de mémoire (S2) sont attribuées au second déclencheur (T2).

8. Procédé selon la revendication 7, **caractérisé en ce que** l'appareil de communication de données (DK) est relié à un appareil de traitement de données et, à l'aide de l'appareil de communication de données (DK), des données sont transmises à l'appareil de traitement de données, sachant que les valeurs lues depuis la première zone de mémoire (S1) ou depuis la seconde zone de mémoire (S2), dont les adresses sont attribuées au premier déclencheur (T1) et ce dernier présente une priorité inférieure à celle du second déclencheur (T2) d'une opération de lecture qui n'est pas encore terminée, ne sont transmises à l'appareil de traitement de données qu'une fois que les valeurs (W), dont les adresses sont attribuées au second déclencheur (T2), ont été transmises à l'appareil de traitement de données.

9. Procédé selon l'une des revendications précédentes, **caractérisé en ce que** l'appareil de communication de données (DK) présente une première mémoire tampon (PS1), qui est attribuée à la première zone de mémoire (S1), et durant l'interruption de la mémorisation dans la première zone de mémoire (S1), les valeurs (W') des données dans la première mémoire tampon (PS1) arrivant dans le temps après le premier déclencheur (T1) sont temporairement mémorisées, et
les valeurs temporairement mémorisées (W') des données sont mémorisées dans la première zone de données (S1) après la lecture depuis la première zone de données (S1).

10. Procédé selon la revendication 9, **caractérisé en ce qu'**une première mémoire tampon (PS1) est attribuée à la première zone de mémoire (S1) et une seconde mémoire tampon (PS2) est attribuée à la seconde zone de mémoire (S2), sachant que la première mémoire tampon (PS1) et la seconde mémoire tampon (PS2) se présentent respectivement sous la forme d'une mémoire séparée ou d'une partie d'une mémoire présentant plusieurs sorties.

11. Procédé selon la revendication 9 ou la revendication 10, **caractérisé en ce qu'**une troisième mémoire tampon (PS3) commune est disposée en amont de la première mémoire tampon (PS1) et de la seconde mémoire tampon (PS2).

12. Procédé selon l'une des revendications précédentes, **caractérisé en ce qu'**une valeur
obtient dans la première zone de mémoire (S1) une première adresse en mémoire, obtient dans la seconde zone de mémoire (S2) une seconde adresse en mémoire, sachant que pour une valeur, l'adresse dans la seconde zone de mémoire (S2) est obtenue par addition d'une valeur d'adresse prédéterminée à la première adresse en mémoire.

13. Procédé selon l'un des revendications précédentes, **caractérisé en ce que** le premier déclencheur (T1), s'il est présent dans l'appareil de communication de données (DK), est attribué exactement à la première zone de mémoire (S1), le second déclencheur (T2), s'il est présent dans l'appareil de communication de données (DK), est attribué exactement à la seconde zone de mémoire (S2), et en cas de présence du premier déclencheur (T1), les valeurs (W) sont lues seulement depuis la première zone de mémoire (S1), et en cas de présence du second déclencheur (T2), les valeurs (W) sont lues seulement depuis la seconde zone de mémoire (S2).

14. Procédé selon la revendication 13, **caractérisé en ce que** l'attribution du premier déclencheur (T1) à la première zone de mémoire (S1) est annulée après la lecture des valeurs (W) depuis la première zone de mémoire (S1).
